Europäisches Patentamt

European Patent Office

Office européen des brevets

(19)

(11) **EP 0 743 596 A2**

## (12) EUROPEAN PATENT APPLICATION

(43) Date of publication:
**20.11.1996 Bulletin 1996/47**

(51) Int Cl.<sup>6</sup>: **G06F 9/44**

(21) Application number: **96303406.1**

(22) Date of filing: **14.05.1996**

(84) Designated Contracting States:
**DE FR GB**

(30) Priority: **19.05.1995 US 446184**

(71) Applicant: **AT&T Corp.**
**New York, NY 10013-2412 (US)**

(72) Inventors:
• **Jagadish, Hosagrahar Visvesvaraya**
**Union, New Jersey 07922 (US)**

• **Mendelzon, Alberto Oscar**
**Thornhill, Ontario, L3T 5G5 (CA)**
• **Mumick, Inderpal Singh**
**Union, New Jersey 07922 (US)**

(74) Representative:
**Watts, Christopher Malcolm Kelway, Dr.**
**Lucent Technologies (UK) Ltd,**
**5 Mornington Road**
**Woodford Green Essex, IG8 0TU (GB)**

(54) **Method for managing rule conflicts in active rulebased systems**

(57)     Many active computer based systems have sets of rules that execute upon the occurrence of particular events when specified condition predicates are satisfied. The present invention presents a method to control the interaction and execution of multiple rules that are triggered by the same condition. The method of the present invention implements logical meta-rules to resolve ambiguities of relationships between rules among multiple triggered rules and arrive at an ordered set of unambiguous system rules. The meta-rules will determine if a rule will never execute, whether two rules can ever be executed together, and whether a rule system will have a unique execution set for all possible rules that become fireable.

## FIG. 1

**Description**

TECHNICAL FIELD OF THE INVENTION

This invention relates generally to active rule-based systems, and more particularly, to managing rule conflicts in active rule-based systems.

BACKGROUND OF THE INVENTION

To decrease software development and maintenance costs, as well as to enhance flexibility, data management and processing have utilized "rule-based" implementations wherever possible. As an attempt is made to capture in rules all the involved semantics of the various applications accessing a database, rule conflicts and ambiguities are frequently, although inadvertently, created.

Active computer-based systems have rules that execute upon the occurrence of particular events or conditions. Each rule has its respective predefined condition predicate where the action required by the rule will be executed where the specified conditions of that rule are satisfied.

Oftentimes multiple rules may qualify for firing simultaneously because a particular event satisfies the predicates of more than one rule at the time of the event's occurrence. For active computer-based systems implemented on a sequential computer, the action required by only one of the multiple fired rules can be executed at any one time.

Designers of active databases and rule-based systems have struggled with the triggering of multiple conflicting rules, and a wide variety of prior art techniques have been proposed and implemented to control rule execution (the execution of the action part of a rule) for handling multiple rule conflicts.

One prior art method is to simply fire all rules that qualify (i.e., satisfy their predicates) in parallel. While such a mechanism has the benefits of being clean to understand, the action parts of the rules must commute for every pair of rules that may simultaneously execute, which restricts what can be programmed into the action parts of rules.

Another prior art method is to use criteria such as recency, specificity or "certainty factors" to determine the order of firing. This prior art approach is limited in that one is hard-coding into a system rules that are really heuristic rather than based upon any hard fact. A comprehensive taxonomy of different possible criteria for this prior art method is set forth in Timos K. Sellis and Yannis E. Ioannidis, *Conflict resolution of rules assigning values to virtual attributes,* Proceedings of ACM SIGMOD 1989 International Conference on Management of Data, pages 205-214, Portland, OR, 1989. Selecting rule order is a difficult task which increases in complexity as system complexity increases. A variety of different criteria may be appropriate in different circumstances.

A third prior art method uses explicitly stated priorities between the system rules.

Amongst those methods which explicitly state or record priorities, the simplest techniques require the assignment of a single absolute priority level to each rule. Discussion of these techniques can be found in Michael Stonebraker, E.N. Hanson and S. Potamianos, *The postgres rule manager,* IEEE Transactions of Software Engineering, 14(7):897-907, (July 1988); and, E.N. Hanson, *An initial report on the design of Ariel,* Sigmod Record, 18(3):12-29, (September 1989). More sophisticated systems permit specification of relative priorities. For example Starburst, described in Jennifer Widom, Roberta Jo Cochrane and Bruce Lindsay, *Implementing set-oriented production rules as an extension to starburst,* in Proceedings of the Seventeenth International Conference on Very Large Databases, Guy M. Lohman, Amilcar Sernadas, and Rafael Camps, editors, Barcelona, Spain, (September 3-6, 1991), pages 275-284, permits explicitly specified relative priorities but uses default priorities derived by application of a heuristic criterion where no explicit priorities have been specified. See also Rakesh Agrawal, Roberta Cochrane, and Bruce Lindsay, *On maintaining priorities in a production rule system,* In Lohman et al. *supra,* pages 479-487.

Even where rules of an ordered set of rules are eligible to fire at some point in time, execution is not straightforward. One prior art approach that has been adopted by most rule systems in this situation is to simply fire the single highest priority rule from the set, and then reconsider all the rules that now become eligible. Another method creates a queue of rules to be evaluated and fired and uses priorities only to determine the firing order. Even a prior art method which allows explicit specification of "control expression", in a regular expression like syntax, and allows different evaluation mechanisms, considering just one rule, or all rules, does not provide for disabling certain rules explicitly in certain contexts, and default priorities are heuristically derived where none is explicitly specified.

In the context of Datalog rules, a similar prior art approach has been adopted by Tomasz Imielinski and Shamim Naqvi *Explicit control of logic programs through rule algebra,* Proceedings of the Seventh Symposium on Principles of Database Systems (PODS), pages 103-115, Austin, TX, 1988. A regular expression on the alphabet of rules is added to Datalog programs that allow specification of which rules are evaluated after which rules, in parallel with other rules, etc. This shows how to translate a program and an expression into a locally stratified program with the same semantics.

Prior art methods in parallel production systems consider the entire set of eligible rules in parallel rather than one at a time. This forces the explicit specification of conditions under which particular rules are to be turned off. For instance, the Parallel language as disclosed in S.J. Stolfo, H.M. Dewan and Ouri Wolfson, *The parullel parallel rule language,* in ICPP, pages II-36-II-45, (1991) permits specification of "reduction" meta-rules in higher-order logic, using rule names as predicates and predicate names as symbols, to eliminate rules otherwise eligible for firing. A similar strategy is adopted by the CREL system as discussed in D.P. Miranker, C.M. Kuo and J.C. Browne, *On the performance of the crel system, Journal of Parallel and Distributed Computing,* 13:(4):424-441, (December 1991).

Another prior art method where multiple rules are fired is to merge all system rules into a single large trigger with a complex action part. Such an approach suffers from several drawbacks. First, the action part of the resulting mega-trigger would itself involve condition-checking to manage flow of control. A general purpose programming language, rather than just Structured Query Language ("SQL"), may be called for, making the application complex, and losing the advantage of a rule-based system. Also, specifying the flow correctly may be difficult. Second, the design will no longer be modular, and would not be a direct representation of the ideas in a user's mind, unlike the original triggers for the rules. Inclusion of any additional rules after forming the single large rule will typically not be simply a matter of expressing a new rule, but instead a complex re-programming task. Finally, to the extent that the resulting complex program is specified procedurally, opportunities for optimization are lost as well.

## SUMMARY OF THE INVENTION

The present invention discloses a method for implementing system rules in an active computer system in response to an event by inputting one or more system rules from a set of system rules and inputting a set of meta-rules which are implemented using meta-rule language. The system rules are processed according to the meta-rules yielding an ordered set of output rules.

The meta-rules of the present invention can be positive requirement rules, disabling rules, preference rules or scheduling rules.

The invention further discloses reducing the set of system rules and inferring a complete set of meta-rules from the input set of meta-rules.

## BRIEF DESCRIPTION OF THE DRAWINGS

FIG. 1 is a flowchart illustrating the concept of the present invention.

FIG. 2 is a procedure for deriving positive requirement and disabling meta-rules meta-rules implied by a given set of meta-rules according to one embodiment of the present invention.

FIG. 3 is a procedure for deriving an ordered output set of system rules according to one embodiment of the present invention.

FIG. 4 shows an illustrative embodiment of an implementation of the present invention.

## DETAILED DESCRIPTION

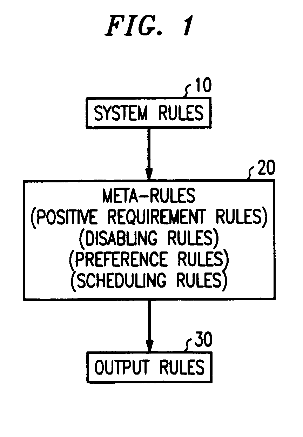

Figure 1 illustrates the concept of the method of the present invention. System Rules **10** of an active rule system are processed according to a scheme determined by a set of logical Meta-Rules **20** to arrive at an ordered set of Output Rules **30**.

The method of the present invention derives and implements logical meta-rules ("meta-rules"), which express various types of relationships between system rules, to resolve ambiguities among multiple triggered system rules and arrive at an ordered set of unambiguous system rules. The meta-rules will determine whether a system rule will never execute, whether two system rules can ever be executed together, and whether a rule system will have a unique execution set for all possible system rules that become fireable.

An active rule system S = <V,M> consists of a set of rules, V, and a set of meta-rules, M.

Active rules, or simply "rules", in one embodiment of the present invention, are "Event-Condition-Action" rules. Each rule is *activated* upon occurrence of a predefined event, such as an insertion of new data into a particular relation in the database or any other event sufficient to trigger or cause activation of a rule or rules (for example, events occurring outside the system itself such as an applicant applying for a loan). The set of rules that can be activated upon a single common event is denoted as V. After a rule is activated, its condition is checked. If the condition of a rule evaluates to true, the rule is said to be *fireable.* The set of fireable rules 10 is denoted as I, or the input set, which is input to the meta-rule analysis discussed below. A fireable rule may or may not be *executed,* depending upon the meta-rules specified to control execution of the rules. The subset of I that actually executes is denoted as O 30, or output set, which is output from the meta-rule analysis. O is a subset of I which is subset of V, or, $O \subseteq I \subseteq V$. An ordering for all the rules in O is determined, and all these rules are executed in the specified sequence.

In one embodiment of the present invention, a language is made available to the rule specifier in which to state *meta-rules* that serve to disambiguate and control system rule interactions.

The method of the present invention uses statements in a control language to manage the interaction of rules in V. In this embodiment, some subset of propositional logic, with two propositional symbols for each rule in the underlying system is used as the meta-rule control language, or simply "meta-rule language". For rule $R_j$, proposition $I_j$ can mean "rule $R_j$ is enabled to fire" and proposition $O_j$ can mean "rule $R_j$ actually fires." Control rules are statements of the form: "if certain rules are/are not enabled, and certain rules fire/do not fire, then certain other rules must/must not fire."

The meta-rule language of the present embodiment provides the expressive power to be able to enforce most of the types of rule interactions that users and applications may desire or require. The set of meta-rules of the present embodiment expresses all the rule interactions of interest.

M 20 is a set of *meta-rules* that controls the interaction and execution of the rules in V. These meta-rules are used to (1) select the set O 30 from I 10, and (2) to order the resulting execution set. The rules in the set I - O are not executed as a result of the restrictions imposed by the meta-rules.

Meta-rules according to this embodiment of the present invention are of the following four types: *Positive requirement; Disabling; Preference;* and, *Scheduling,* where a, b, c, d,... $\in$ V:

*Positive requirement meta-rules,* expressed symbolically as a $\supset$ b, are defined such that if rule a executes, then rule b must execute as well. Restated, if a certain system rule is selected for execution, then some other system rule must also be selected for execution.

*Disabling rules,* expressed symbolically as $\overline{ab}$, are defined such that rules a and b disable each other and only one of them may execute. Disabling meta-rules allow certain system rules, when selected for execution, to prevent others from being executed. The meta-rule $\overline{a}$ is a special unary case of this rule and means that the rule a can never be executed. It can be viewed as short hand for $\overline{aa}$.

The present invention also provides for a uni-directional disabling meta-rule, where if rule a executes, then rule b is disabled. This uni-directional rule is equivalent to a statement that a and b cannot both execute together. As such, disabling rules are stated without directionality whereas positive requirement is uni-directional. (Two positive requirement rules, inverses of each other, can be used to capture bi-directional positive requirement).

*Preference rules,* expressed symbolically as b > a, are defined such that if a and b are both fireable, then b should not be dropped from the execution set unless a also is. In other words, if a and b are both fireable, and there is some reason why a and b cannot both be executed, then the preference is to execute b rather than a. Preference meta-rules give a specific system rule priority over another one if only one of a pair of system rules can be selected for execution at a given time.

*Scheduling rules,* expressed symbolically as a < b, are defined such that if a and b are both selected for execution, a is to execute before b. Scheduling meta-rules give control over the order in which system rules selected for execution are actually executed.

The formal semantics of a set M of meta-rules is defined by considering models for the set M. A *model* for a set M of meta-rules is defined as a quadruple $\langle$V, I, O, $\omega\rangle$ where V is a set of rules O $\subseteq$ I $\subseteq$ V, and $\omega$ is a total order on the set O.

$\langle$V,I,O, $\omega\rangle$ will *satisfy* meta-rule $\mu$ if:

1. $\mu$ is of the form a $\supset$ b and if a $\in$ O, then b $\in$ O.

2. $\mu$ is of the form $\overline{ab}$, and $\neg$(a $\in$ O & b $\in$ O).

3. $\mu$ is of the form b > a and if ab $\subseteq$ I & a $\in$ O, then b $\in$ O.

4. $\mu$ is of the form a < b and if a and b both appear in O, then a appears before b in the total order $\omega$.

The quadruple $\langle$V, I, O, $\omega\rangle$ is a model for the set M of meta-rules if $\langle$V, I, O, $\omega\rangle$ satisfies every meta-rule $\mu$ $\in$ M.

For a given grammar an active rule system S = $\langle$V, M$\rangle$, the present invention allows determination of:

. Given a rule a $\in$ V, whether there is any input set for which a does not execute and is a *dead rule;* identification of all such dead rules;
A rule may never fire because it has a condition predicate that can never be true, or is triggered by an event that can never occur.
Dead rules are all rules that are dead on account of the specified set of meta-rules;

. Given a pair of rules a, b $\in$ V, whether there is any input for which a and b execute together and identify all such a, b pairs; as in the case of dead rules, no analysis is done to determine whether there actually is a database state and event occurrence for which the condition predicates of the two rules can actually be satisfied simultaneously. It is only captured whether such simultaneous satisfaction is possible given the set of meta-rules. If the application semantics indicate that two rules can never fire together, it is useful to capture this as a meta-rule.

. Whether a non-empty solution O is possible for a least one valid non-empty input set I;

. Whether the set of meta-rules is expected to result in a unique total order $\omega$ for every output set O for every is fireable set I;

. Whether any of the meta-rules in M is redundant.

Given a set M of meta-rules, other meta-rules will be logically implied by this set. For instance, if rule a positively requires b and b in turn positively requires c, then any model of these two meta-rules must also satisfy that a positively requires c, even though this requirement may never have been explicitly stated in a meta-rule. Similarly, if a positively requires c, but a and c disable each other, then a can never execute (rule a disables itself).

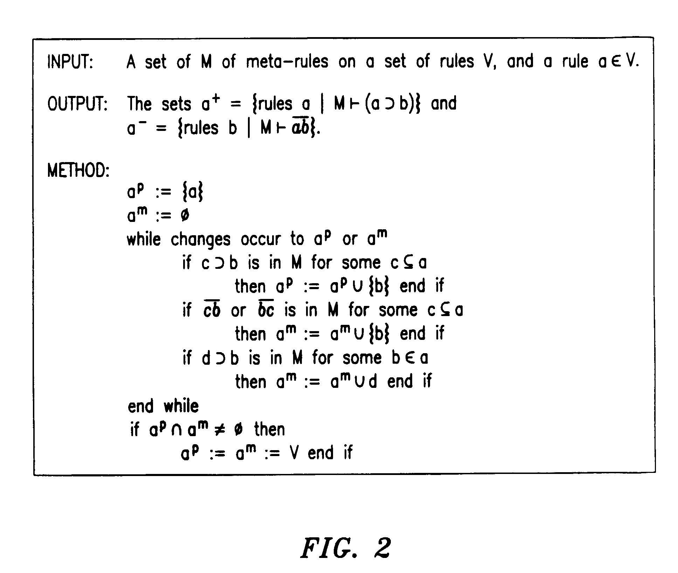

Inference of meta-rules in the above manner can be done independent of the input set I. An inference procedure is provided by the present invention as shown in FIG. 2 that will infer virtually every interaction relationship derivable on the basis of the given set of rules V and meta-rules M in a rule system S. The inference procedure can be used to identify "dead" rules that can never execute as well as providing a basis for other determinations.

The first set of inference rules in the present embodiment initially defers analysis with respect to the scheduling meta-rules. The scheduling meta-rules are considered in later stages of the analysis.

In a rule system S, comprising the set V and the meta-rules M, M *implies* a meta-rule $\mu$ if every model of M satisfies $\mu$.

A set of syntactic inference rules, according to this embodiment and set forth below as Axioms A1-A8, define meta-rule implication (i.e., inference). The inference rules are of the form $\Gamma \vdash \gamma$, where $\Gamma$ is a set of meta-rules and $\gamma$ is a meta-rule. Meta-rule $\mu$ can be derived from the set of meta-rules M, denoted $M \vdash \mu$, when either $\mu$ is in M, or can be derived from M by repeated number of applications of inference rules A1-A8.

A1: $\overline{ab} \vdash \overline{ba}$, where if a cannot execute with b, then b cannot execute with a.

A2: $(a \supset b \land \overline{bc}) \vdash \overline{ac}$, where if a positively requires b, and if b and c cannot execute together, then rules a and c can never execute together.

A3: $\overline{a} \vdash \overline{ab}$, where if rule a can never execute, then for every rule b, rules a and b can never execute together.

A4: $\vdash a \supset a$, where rule a positively requires itself.

A5: $(a \supset b \land b \supset c) \vdash a \supset c$, where if a positively requires b, and if b positively requires c, then a positively requires c.

A6: $\overline{a} \vdash a \supset b$, where if rule a can never execute, then for every b, rules a positively requires rule b.

A7: $\vdash a > a$, where rule a has a preference to itself.

A8: $(a \supset b \land c > c) \vdash c > c$, where if a positively requires b, and if rule c has a preference to rule b, then rule c has a preference to rule a.

M implies $\mu$ if and only if $\mu$ can be derived from M using these rules. The set of inference rules A1-A8 is sound and complete for positive requirement, disabling, and preference rules.

In view of the completeness of the inference rules A1-A8, it is possible to determine which positive requirement and disabling meta-rules are implied by a set of rules without considering the preference rules. Where $\hat{M}$ is the set of rules in M of the form $a \supset b$ or $\overline{ab}$ and $\mu$ be a rule of one of these forms, then $M \vdash \mu$ *if and only if* $\hat{M} \vdash \mu$.

An illustrative procedure according to the present invention for derivation of the set of positive requirement and disabling meta-rules implied by M for a given a set of meta-rules M, is shown in accompanying FIG. 2. For each rule a, the set $a^+ = \{\text{rules } b \mid M \vdash (a \supset b)\}$ and the set $a^- = \{\text{rules } b \mid M \vdash \overline{ab}\}$ is computed. Upon completing the procedure of FIG. 2, $a^p = a^+$ and $a^m = a^-$.

The procedure of FIG. 2 gives an efficient implication test for positive requirement and disabling meta-rules. Implication of preference rules can be tested according to the following theorem: $M \vdash b > a$ if and only if either $b \in a^+$ or if M derives a rule $b > c$ such that $c \subseteq a^+$.

Implication of positive requirement, disabling or preference meta-rules from a set of meta-rules M can be tested in time polynomial in the size of M.

The scheduling meta-rules are now brought into the analysis. Interaction between the scheduling, positive requirement, and the disabling meta-rules, are captured by the following three inference axioms. The notation $a \supset X$ is used, where a is a rule and X is a set of rules, to abbreviate $a \supset b$ for every $b \in X$.

A9: $(a \land b_1 \land b_1 \land b_2 \land ... \land b_k \land b) \land a \supset X \land b \supset Y \vdash a \prec b$, where $X \cup Y = \{b1,...,b_k\}$. $\prec$ is transitive as long as the two ends of a path require all the midpoints to be also present.

A10: $(b_1 \land b_2 \land ... \land b_k \land b_1) \land a \supset X \land b \supset Y \vdash \overline{ab}$, where $X \cup Y = \{b_1,...,b_k\}$. If there are two rules a and b that together require the execution of a set of rules whose precedence relation is cyclic, then a and b cannot be both selected for execution.

A11: $\overline{ab} \vdash a \prec b$. $a \prec b$ means if a and b both appear in the execution sequence, then a appears before b, which is trivially true if a and b can never both appear in the execution. $b \prec a$ can also be derived by axiom A11.

The set of inference rules A1-A11 is sound and complete for positive requirement, disabling and scheduling rules.

Rule system $S = \langle V, M \rangle$ has several static properties, which are those properties that can be determined without looking at a specific input set. These properties include liveness, determinism and well ordering.

Rule a is said to be *live* in a rule system S if there exists a fireable set I for which a is in the execution set O. A rule that is not live is referred to as *dead*. A rule that is not live may be deleted from the rule system, along with any meta-rules that are incident upon it, thereby reducing the size of the rule system.

A rule is dead in a rule system S if and only if the meta-rule set M derives the meta-rule $\overline{a}$.

It is also useful to know which pairs of rules in a rule system can occur together in some set O, for example, when deciding what scheduling meta-rules to specify. Unless it is known (either through derivation or explicitly) that two rules cannot fire together, there is at least some model in which the two rules could fire together (not taking into account semantics specific to the application and not analyzing the internals of either rule). Given a set of meta-rules M, rules a and b can occur in the set O of some model M if and only if M $\forall$ $\overline{ab}$.

Regarding the property of determinism, the rule system is characterized such that, for every fireable I, the execution set O is uniquely defined by rules and meta-rules. Maximal execution sets allow firing of every fireable rule that is not blocked by the meta-rules and the other fireable rules.

A rule system S = $\langle$V,M$\rangle$ is *deterministic* if for each input set I there is a unique maximal set O such that for one or more total orders $\omega$ on O, $\langle$V,I,O,$\omega\rangle$ is a model of M.

Non-determinism is introduced in a rule system by disabling rules; if rules a and b are fireable, in the face of the meta-rule $\overline{ab}$, with no knowledge for preferring a to b, two maximal execution sets may exist one maximal execution set in which a fires and one where b does. The disabling rules must be "disambiguated" by assigning them a preference in order to guarantee determinism. A sufficient and necessary condition is derived according to this embodiment under which a rule system is completely disambiguated.

Pre-processing the rules into a reduced rule system facilitates the analysis leading to the condition for determinism. Given a rule system S' = $\langle$V',M'$\rangle$, the reduced rule system S = $\langle$V,M$\rangle$ is obtained by the following procedure:

- Construct a positive requirement graph G, having one node for each rule in V'. There is an edge from node a to node b if the meta-rule a $\supset$ b is in the set M'.
- Reduce each strongly connected component {$a_1$,..., $a_k$} of G into a single node a.
- Reduce rule set V by replacing rules {$a_1$,...,$a_k$} by a single symbol a. Reduce the meta-rule set M by replacing each occurrence of $a_i$ by the new rule symbol a. Eliminate duplicate meta-rules.
- The reduced rule set and meta-rule set are V and M, respectively.
- Perform a liveness analysis on $\langle$V,M$\rangle$, and eliminate any and all dead rules from V.

The reduction eliminates all positive requirement cycles from the meta-rule set, and allows reasoning about these rules together as a set. The rules in such a cycle either must all be in the output set, or must all be excluded from the output set. If any one rule in a cycle is dead, all the rules will be dead. So, the analysis of these can be done faster by one rule symbol. All dead rules are also eliminated from the rule system to make further analysis faster.

Given the reduced system S = $\langle$V,M$\rangle$, D is the set of all disabling meta-rules in M, and e is all the remaining meta-rules in M. D is minimized by repeated application of the following step until it no longer applies to arrive at a minimal disabling set:

- If a meta-rule $\mu \in$ D can be derived from $\varepsilon \cup$ D - {$\mu$}, then remove $\mu$ from the set D.

The resulting set D is the minimal disabling set. The meta-rules in D are minimal disabling meta-rules. Given a reduced system S = $\langle$V,M$\rangle$ the minimal disabling set D is unique and well-defined.

The reduced rule system S, comprising a set of rules V and a set of meta-rules M, is deterministic if and only if for every minimal disabling rule $\overline{ab}$ in M, either M $\vdash$ (a > b) or M $\vdash$ (b > a).

Given a deterministic rule system, a unique total order $\omega$ upon each output set O is necessary.

A deterministic rule system S, comprising a set of rules V and a set of meta-rules M, is said to be *well-ordered* if M implies a unique total order $\omega$ for the rules in O. That is, no matter what the input set, if rules a and b appear in the output, they must appear in the same order.

A necessary and sufficient condition for well-ordering is that the deterministic reduced rule system S, comprising a set of rules V and a set of meta-rules M, is well-ordered if for every pair of rules a, b, $\in$ V, M implies one of:

1. $\overline{ab}$,
2. a $<$ b, or
3. b $<$ a.

If the necessary and sufficient condition is not satisfied, on account of a particular pair of rules a and b, then the programmer will know that the relative order of these rules will be determined by the system, in a possibly arbitrary manner. If the relative order of execution of these rules is immaterial, the programmer could leave it be; otherwise, the programmer could assert an appropriate disabling rule or sequencing rule for this pair, and make the system well-ordered.

It will be evident to one skilled in the art that it is shown from the static analysis without a specific input set, how to determine useful properties of the rule system, and utilize these to assist a programmer in specifying additional or different meta-rules.

Actual application of the meta-rules given that a particular event has occurred, and multiple rules have their condition predicates satisfied will now be discussed. That is, given a deterministic rule system S and a fireable set I, computation of the corresponding execution set O, and establishing a total order on it are the remaining steps.

The set of meta-rules M are assumed to be reduced as described above, that is, rules that positively require each other have been collapsed into equivalence classes. It is straightforward to translate fireable rules into their class representative before applying the procedure, and back from class representatives into individual rules after the procedure is done.

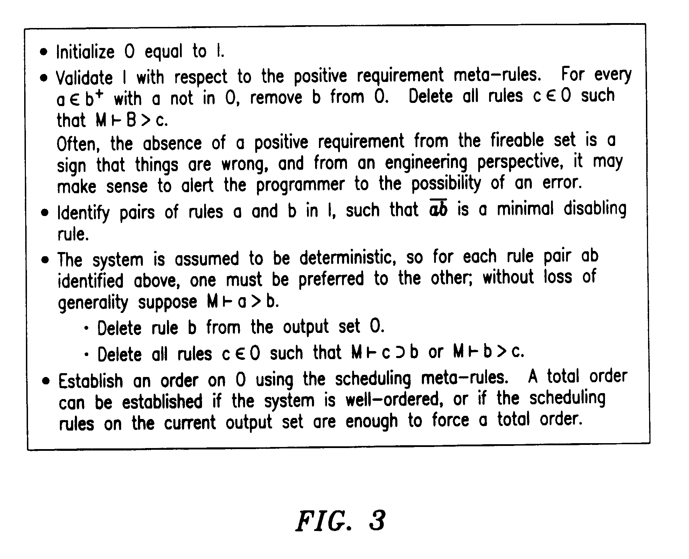

The procedure to derive the ordered output set in one embodiment of the present invention is set forth in FIG. 3.

In an alternative embodiment, an implementation can be made more efficient by using graphs. A *meta-rule graph* is defined with one node for each live rule in the rule set V, an undirected edge for each essential disabling meta-rule, and three types of directed edges - one for each positive requirement meta-rule (from node a to node b for meta-rule a $\supset$ b), one for each preference meta-rule (from node b to node b for meta-rule a > b), and one for each scheduling meta-rule (from node a to node b for meta-rule a < b).

When building the meta-rule graph, only the transitive reduction of the set of positive requirement meta-rules need be considered, and the scheduling rules that are derived from inference axiom [A8] can be ignored. The meta-rule graph is reduced along the cycles involving the positive requirement edges, and the reduced graph is topologically sorted on the positive requirement edges.

When given a particular input set I, the meta-rule graph is first "projected" on the set of nodes in I. The projection retains only the nodes of the graph that are in I, only the positive requirement edges in the graph that emanate from a node in I (if the destination is not in I, create a special node marked NULL), and only the scheduling, preference, and disabling edges in the graph that are between two nodes in I. Next, the projected meta-rule graph is traversed in reverse topological order (with respect to the positive requirement meta-rules), and for each node.

. If there are any outgoing preference edges to NULL, delete this node, all ancestors of this node, and all nodes with preference edges to any deleted nodes.
. If there are any disabling edges incident on this node, check for preference direction on the disabling edge. Delete the node that is less preferred, all its ancestors, and all nodes with preference edges to deleted nodes.

The nodes that remain in the graph, in the topological order according to the scheduling edges, are the desired execution sequence in the output set.

The ordered set derivation of FIG. 3 computes the output set for a deterministic rule system in time polynomial in the number of rules in the input set I. This guarantees that, given a set of fireable rules, determining which ones to execute, and in which order, is not too expensive (with respect to resource consumption). In fact, with the graph structures, the output set can be computed in time linear in the number of meta-rules.

This polynomial (in number of rules fireable) cost may be of concern in high performance applications. There are only a few canonical types of updates in such applications, with corresponding sets of fireable rules. One can compute the execution sequence once for each such combination, and store these in a table.

Thereafter, whenever a (typical) event causes a set of rules to become fireable, one only has to look up this table to find the proper execution sequence.

An illustrative embodiment of an airline database is presented to aid in understanding the present invention.

Whereas a typical airline database would have many fields in addition to a field for recording frequent flier miles, a simplified schema referring only to this field is used to illustrate the principles of the present invention.

The illustrative airline database having a field for recording frequent flier miles for each customer has the following relations:

1. A FLIGHT-DETAIL relation with one record per flight per customer, with attributes cust-id, origin, destination, date, class-of-service, miles, among others. The miles field records the number of frequent-flier miles earned by the customer on account of this flight.

2. A DISTANCE relation with one record per pair of cities, indicating the distance in air miles between the two cities. This relation has attributes origin, destination, and distance.

3. A CUSTOMER relation with one record per customer. This relation has cust-id as key, and several other attributes, including total-miles, representing the total frequent flier mileage accumulated by the customer, and status, representing the current membership grade for the customer, such as Basic, Silver, Gold, or Platinum.

One frequently applied update to this database is the addition of new records to the FLIGHT-DETAIL relation, recording the fact that some customers took some particular flights. For illustrative purposes, assume that at the time of this insertion, the miles field in the record(s) is set to zero (or null). Associated with this insertion are triggers that cause an appropriate value of this field to be computed, based upon information in the database. Further triggers cause the total-miles field in the CUSTOMER relation to be updated as well.

Some of the triggers written for this purpose are described below. The "event" for each of these is the insertion (of a set of tuples) into the FLIGHT-DETAIL relation, and is omitted. The newly inserted tuples are assumed to be in the relation **INSERTED**. The action and condition parts of the triggers are written below in an SQL-like syntax.

[a]:

```
UPDATED INSERTED
SET miles = (SELECT distance
FROM DISTANCE
WHERE origin = INSERTED.origin AND desti-
```

nation = INSERTED.destination).

Rule [a] does the basic miles computation based upon the distance between the pair of cities flown. This rule (and several of the rules below) applies to each tuple in the inserted set.

[b]:

```
UPDATE INSERTED
SET miles = 500
WHERE miles < 500.
```

At least 500 miles are awarded for each flight taken.

[c]:

```
UPDATE INSERTED
SET miles = 2 x miles
WHERE class-of-service = "first".
```

Rule [c] awards double miles to first class customers.

[d]:

```
UPDATE INSERTED
SET miles = 2 x miles
WHERE "premium" = (SELECT status
        FROM CUSTOMER
            WHERE cust-id = INSERTED.cust-
id).
```

Rule [d] awards double miles to "premium" customers.

[e]:

```
UPDATE INSERTED
SET miles = 500 + miles
WHERE 10,000 < (SELECT total-miles
        FROM CUSTOMER
            WHERE cust-id = INSERTED.cust-
id).
```

Rule [e] awards an extra 500 miles to any customer with more than 10,000 miles in their account already.

[f]:

```
UPDATE INSERTED
SET miles = 500 + miles
WHERE destination = "SFO".
```

Rule [f] awards an extra 500 miles to any customers who fly into San Francisco airport as a special promotion.

[g]:

```
UPDATE CUSTOMER
SET total-miles = total-miles + (SELECT SUM
(mileS)
        FROM INSERTED
        WHERE CUSTOMER.cust-id
        = INSERTED.cust-id).
```

Rule [g] accumulates into the **CUSTOMER** relation the total mileage awarded. **SUM** is used since **INSERTED** is a *set* of inserted tuples, and more than one of these could pertain to the same customer.

It will be obvious to one of ordinary skill in the art that these triggers have interactions. For instance, if the trigger [g] happens to be executed before all the other applicable ones, then the result stored for the total miles in the **CUSTOMER** relation will be wrong. Similarly, [a] must have completed execution before any of the other rules can execute properly.

Some controls on trigger execution, such as those discussed in the preceding paragraph, are required simply to produce a meaningful result. Other controls may be applied to select between different possibilities. For instance, applying [f] before [d], will in effect give premium customers 1000 miles extra, rather than 500 miles extra, if SFO is their destination. Applying [d] before [f] will give even premium customers only 500 extra miles for SFO. Which order is chosen affects the final value for miles earned.

Often, premium customers may have more than 100,000 miles in their account. It is desired that these customers get only the double miles and not the 500 mile bonus in addition. In other words, rule [d] and rule [e] disable each other. Further, for a premium member with more than 100,000 miles, the premium bonus is preferred to the 100,000 mile bonus.

The present invention in order to manage interactions between rules provides for declarative specification of meta-rules. For instance, a meta-rule could state, in the example above, that only one of [d] and [e] should execute.

Meta-rules are then specified and implemented such that select a sub-set of applicable rules for execution in any context, and this selected sub-set is then executed in a desired order.

Consider the active rules [a]...[g]. All these rules are activated upon an insertion in to the **FLIGHT-DETAI**L relation. Thus V = {a,b,c,d,e,f,g}.

When checking the condition for each rule, the **WHERE** clause of the **UPDATE** commands. Rules [a] and [b] are always fireable since **miles < 500** is true initially, and since it is assumed that there is a **DISTANCE** tuple between every pair of cities. Rule [c] is fireable if the flight is taken in first class. Rule [d] is fireable if the flight is taken by a "Premium" customer. Rule [e] is fireable if the flight is taken by a customer with more than 10,000 total miles. Rule [f] is fireable if the flight ends in San Francisco. Rule [g] is fireable if the flight is taken by a registered customer. Thus, the input I set depends upon the inserted flight tuple, and the customer's record.

The meta-rules of the example database are as follows:

*Positive requirement meta-rules:* In the example, rule [c] requires that rule [a] must also execute, otherwise the value of miles is undefined. To express this constraint, a meta-rule [c] ⊃ [a] is defined.

*Disabling rules:* In the example, only one of rules [d] and [e] should be allowed to execute.

As previously mentioned, one could have a uni-directional disabling meta-rule: for instance that if rule a executes, then rule b is disabled. While such a notion of causality does indeed occur sometimes in the application semantics, in terms of what is in the execution set, this uni-directional rule is equivalent to a statement that a and b cannot both execute together. this is the reason why disabling rules according to the present invention are stated without directionality whereas positive requirement is uni-directional. (Two positive requirement rules, inverses of each other, can be used to capture bidirectional positive requirement).

*Preference rules:* In the example, when rules [d] and [e] are both fireable, execution of both these rules is disallowed by the disabling meta-rule $\overline{ab}$. At this point, it is preferred to execute rule [d] rather than rule [e], that is, [d] > [e].

*Scheduling rules:* In the airline example, when rules [a] and [b] are both executable, rule [a] can be required to execute before [b] by stating [a] < [b].

As mentioned earlier, [d] > [e] means that rule [d] is chosen when both rules [d] and [e] are fireable but only one must be chosen. If the fireable set contains only [e], then it is OK to execute [e]. If the fireable set contains only [d], then it is OK to execute [d]. On the other hand, [c] ⊃ [a] means that for rule [c] to execute, rule [a] must execute. If only rule [c] is fireable, then [c] cannot execute. However, if only rule [a] is fireable, then [a] can execute, and if both rules [a] and [c] are fireable, but one of these must be chosen, then rule [a] can execute.

For the example, the following meta-rules capture the rule interactions mentioned above.

b ⊃ a: Rule [b] positively requires rule [a].

c ⊃ b, d ⊃ b, e ⊃ b, f ⊃ b, and g ⊃ b: Rules [c], [d], [e], [f], and [g] all positively require rule [b]. $\overline{de}$: Rules [d] and [e] cannot execute together. d > e: If both [d] and [e] are fireable, then prefer [d]. a < b, b < c, b < d, b < e, b < f, b < g, c < f, c < g, d < f, d < g, e < f, e < g, and f < g: Whenever a listed pair is executed, one must be scheduled before the other.

For the airline example, the quadruple

⟨{a, b, c, d, e, f, g}, {a, b, c, d, g}, (a → b → c → d → g)⟩ is a model. The term (a → b → c → d → g) specifies the total order ω between the rules in the output set.

Running procedure of FIG. 2 on the above meta-rules for the airline ECA rules, derives (or "infers") the following positive requirement meta-rules. No new disabling meta-rules can be derived. The trivial positive requirement meta-rules of the form a ⊃ a are not listed.

c ⊃ a, d ⊃ a, e ⊃ a, f ⊃ a, and g ⊃ a.

Given these meta-rules, the positive requirement and disabling rules are inferred. The following preference meta-rules are then derived (again the trivial preference rules of the form a > a are not listed).

a > b, a > c, a > d, a > e, a > f, a > g, g > c, b > d, b > e, b > f.

Given the meta-rules and the positive requirement, disabling and preference rules are then derived. Axioms A9-A11 are used to derive the following scheduling meta-rules:

a < c, a < d, a < f, a < g, all using Axiom A9.

In this example no meta-rule of the form $\overline{a}$ was derived. Therefore, all the rules are live. The only disabling rule derived was $\overline{de}$. Thus, all other pairs of rules can co-occur in the output set for some input set.

Let S be V = abcd,M = {$\overline{ab}$, $\overline{cd}$, c > d, a, ⊃ c, b ⊃ d}. This is a reduced system since the positive requirement graph is acyclic. The minimal disabling set is {$\overline{cd}$}, since the rule $\overline{ab}$ can be derived as follows: a ⊃ c ∧ $\overline{cd}$ yields $\overline{ad}$ by axiom A2. b ⊃ d ∧ $\overline{ad}$ yields $\overline{ab}$ by axiom A2.

For this example, the positive requirement graph is acyclic, so the reduced system is the same as the original system. Further, there is only one disabling rule $\overline{de,}$ and it cannot be derived from any subset of the meta-rule set. Hence the minimal disabling set is {$\overline{de}$}.

There is only one minimal disabling rule $\overline{cd}$, and it is the case that the preference meta-rule c > d is by M. The system is deterministic, even though there is another disabling rule $\boldsymbol{ab}$, for which no preference meta-rule is derivable. The reason is that a choice between a and b gets made as an indirect effect of choosing between c and d.

Indeed, the unique (input/output) sets for all the possible 16 inputs to this system include: Ø/Ø, a/Ø, b/Ø, c/c, d/d, ab/Ø, ac/ac, ad/d, bc/c, bd/bd, cd/c, abc/ac, abd/bd, acd/ac, bcd/c and abcd/ac.

There is a preference meta-rule d > e for the only minimal disabling rule is $\overline{de}$. Thus, the airline system is deterministic.

The present invention not only provides a sufficient condition to the answer whether the rule system chooses a unique maximal output, but also provides guidance regarding what must be done to make the system deterministic if it isn't already deterministic. Specifically, particular minimal disabling meta-rules can be identified that do not have a preference direction specified on them. The programmer could then add appropriate preference rules to make the system deterministic.

For the reduced rule set V = {a,b,c}, and M = {a < b, b < c}, this rule system is deterministic. For an output I, the output set is also I.

However, the system is not well-ordered. For the input {a,b,c}, the output can be ordered as (a → b → c). However, for the input {a,c}, the output cannot be ordered. This is because the intermediate node b in the scheduling meta-rules can be used to infer a < c only when b is in the output, and b is not always in the output.

Thus, this system is not well-ordered due to the pair a,c. The system can be made well-ordered by specifying meta-rules. A programmer may also choose to live with a non well-ordered system if he knows that the order between a and c is not important.

The complete set of meta-rules that can be derived according to the present invention from the given set of meta-rules include (the trivial preference and positive requirement meta-rules of the form a > a and a ⊃ a are not included):

b ⊃ a, c ⊃ a, d ⊃ a, e ⊃ a, f ⊃ a, g ⊃ a, c ⊃ b, d ⊃ b, e ⊃ b, f ⊃ b, g ⊃ b.

$\overline{de}$

d > e, a > b, a > c, a > d, a > e, a > f, a > g, b > c, b > d, b > e, b > f.

a < b, a < c, a < d, a < f, a < g, b < c, b < d, b < e, b < f, b < g, c < f, c < g,

d < f, d < g, e < f, e < g, and f < g

There are several pairs of rules for which neither the precedence nor the disabling rules hold. For example, (c,d) and (c,e) are two such pairs. Thus this system is not well-ordered. Now, for (c,d), it doesn't really matter what order is used, since multiplication is commutative. However, for (c,e) the order is material. At this point, the rule system designer would write a new scheduling rule, say c < e.

Further detailing the example, let a tuple be inserted into the FLIGHT-DETAIL database, and as a result, let the rules I = {a,b,d,e,g} be fireable. Completing the procedure of Fig. 3, the I set is valid with respect to positive requirement meta-rules. So O is set equal to I = {a,b,d, e,g}. In the next step, considering the minimal disabling meta-rule $\overline{de}$, and given the preference rule d > e, rule e is dropped from O. There is no meta-rule of the form a ⊃ e or e > a that can be derived, so nothing more needs to be done.

No other minimal disabling rule remains, so the output set O = {a,b,d,g} is the final output set. As for the order, given the scheduling meta-rules shown above, the total order ω = (a → b → d → g) can be obtained.

As a further example, consider another activation of the rules, leading to the input set I = {a,b,c,d,g}. No rules are dropped due to disabling rules, and yielding O = I = {a,b,c,d,g}. Now two orders are possible, $\omega_1$ = (a → b → c → d → g), and $\omega_2$ = (a → b → d → c → g). Both of these orders produce the same result, so the rule system designer may well ignore this issue, and let the system chose any of one of these orders.

The present invention presents an intuitive declarative means for a programmer to specify and manage interactions between multiple rules in an active database. A formal axiomatization for such a specification as well as a sound and complete procedure to derive implications from any set of such specified meta-rules are provided in the present invention. Simple tests check whether a given rule set is guaranteed to have a well-defined unique execution set, and a unique execution order, irrespective of which specific rules have their condition predicates satisfied simultaneously. Tests are also provided for other desirable properties of rule sets such a liveness, and co-occurrence.

Often, programmers have knowledge of what is inside particular condition predicates. They can use this knowledge to determine, for instance, that if the condition for rule a is satisfied, then the condition for rule b is satisfied as well, or that the condition predicates for rules a and b cannot be satisfied at the same time.

Such "assertions" on the part of the programmer, can also be encoded in the form of positive requirement and disabling meta-rules and used both to manage interaction, as well as to verify correctness at run time.

The vocabulary of meta-rules functional in the present invention is quite general. Not only can a (partial) order between rules selected for execution be established, but reasoning about the set of eligible rules that actually execute is permitted. One rule require another; One rule disable another; or, A preference between rules can be established.

As trigger facilities become more prevalent in databases, and are used extensively, managing multiple trigger rules is going to be one of considerable importance. The present invention provides a declarative mechanism for controlling the interaction of multiple rules, without the need to use global variables that are set by one rule and checked by others. Further, a very complete and powerful analysis system that can not only infer properties of the rule system, but can also guide the programmer in disambiguating the rule system by pointing him towards rules that have ambiguous behavior.

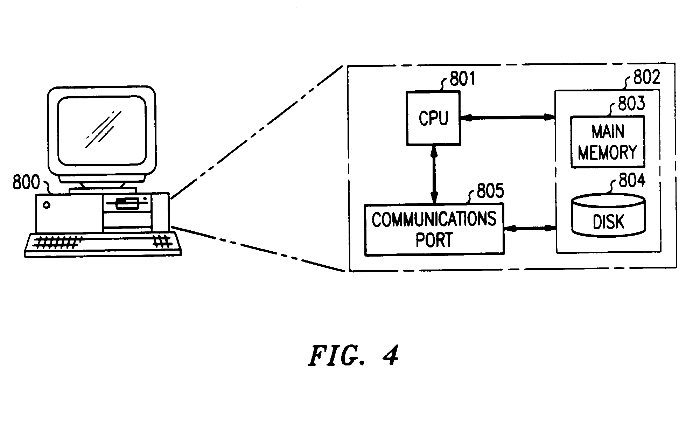

Figure 4 shows a workstation 800 comprised of a central processing unit 801 ("CPU") and storage 802. Storage 802 in turn comprises a main memory 803 and disk 804. Storage 802 contains a set of system rules. The meta-rules of the present invention are entered into said storage 802 via communications port 805. Given the set of meta-rules in storage, 802, a complete set of meta-rules is derived by the CPU 801 by the procedures of the present invention as set forth in figures 2 and 3. The complete set of meta-rules is then stored in storage 802.

An event, entered via communications port 805 causes the set of system rules stored in storage 802 to be evaluated by CPU 801. Zero or more of these rules have their condition predicates satisfied and are fireable (i.e., ready to be executed). The CPU 801 determines the subset of fireable rules which should be fired by application of the meta-rules. The CPU 801 further determines the firing order of the subset of system rules. The CPU then outputs the ordered set of output rules and fires (i.e., executes) the output rules.

While the present invention has been described with respect to a specific embodiment thereof, it will be understood by one skilled in the art that this is not an exclusive embodiment. The present invention is applicable to numerous other rule based system domains.

## Claims

1. A method for implementing system rules in an active computer system in response to an event, comprising the steps of:

    inputting one or more system rules from a set of system rules;

    inputting a set of meta-rules;

    processing said set of system rules by said set of meta-rules; and

    outputting an ordered set of output rules derived from said processing of said system rules.

2. The method of claim 1, wherein at least one of said meta-rules are positive requirement rules.

3. The method of claim 1, wherein at least one of said meta-rules are disabling rules.

4. The method of claim 3, wherein said disabling rules are uni-directional.

5. The method of claim 1, wherein at least one of said meta-rules are preference rules.

6. The method of claim 1, wherein at least one of said meta-rules are scheduling rules.

7. The method of claim 2, wherein said positive requirement rules comprise the step of requiring execution of a second system rule from said one or more system rules when a first system rule from said one or more system rules is executed.

8. The method of claim 3, wherein said disabling rules comprise the step of disabling execution of a second system rule from said one or more system rules when a first system rule from said one or more system rules is executed.

9. The method of claim 5, wherein said preference rules comprise the step of preferring execution of a second system rule where both a first system rule and said second system rule are executable.

10. The method of claim 6, wherein said scheduling rules comprise the step of ordering execution of a first and second system rule selected for execution.

11. A method for implementing system rules in an active computer system in response to an event, comprising the steps of:

    inputting one or more system rules from a set of system rules;

    reducing said set of system rules;

    inputting a set of meta-rules, said meta-rules using a meta-rule language;

    inferring a complete set of meta-rules from said input set of meta-rules;

    processing said set of system rules by said complete set of meta-rules; and

    outputting an ordered set of output rules derived from said processing of said system rules.

12. The method of claim 11, further comprising the step of inferring whether said complete said of meta-rules identifies a unique output order of said system rules for every said system rule that is activated.

13. The method of claim 11, wherein said step of inferring a complete set of meta-rules from said input set of meta-rules further comprises recognition of dead system rules.

14. The method of claim 11, wherein said complete set of meta-rules comprises positive requirement rules, disabling rules, preference rules and scheduling rules.

15. An active computer system responsive to an event, comprising:

    means for inputting one or more system rules from a set of system rules;
    means for inputting a set of meta-rules;
    means for processing said set of system rules by said set of meta-rules; and
    means for outputting an ordered set of output rules derived from said processing of said system rules.

16. An active computer system responsive to an event, comprising:

    means for inputting one or more system rules from a set of system rules;
    means for reducing said set of system rules;
    means for inputting a set of meta-rules, said meta-rules using a meta-rule language;
    means for inferring a complete set of meta-rules from said input set of meta-rules;
    means for processing said set of system rules by said complete set of meta-rules; and
    means for outputting an ordered set of output rules derived from said processing of said system rules.

# FIG. 1

```
                              ┌10
                    ┌─────────────────┐
                    │  SYSTEM  RULES  │
                    └─────────────────┘
                             │
                             ▼
                                            ┌20
      ┌──────────────────────────────────────────┐
      │               META-RULES                 │
      │      (POSITIVE REQUIREMENT RULES)         │
      │           (DISABLING  RULES)             │
      │          (PREFERENCE  RULES)             │
      │          (SCHEDULING  RULES)             │
      └──────────────────────────────────────────┘
                             │
                             ▼
                              ┌30
                    ┌─────────────────┐
                    │  OUTPUT  RULES  │
                    └─────────────────┘
```

INPUT:     A set of M of meta-rules on a set of rules V, and a rule $a \in V$.

OUTPUT:    The sets $a^+ = \{\text{rules } a \mid M \vdash (a \supset b)\}$ and
           $a^- = \{\text{rules } b \mid M \vdash \overline{ab}\}$.

METHOD:

```
        aᵖ := {a}
        aᵐ := ∅
        while changes occur to aᵖ or aᵐ
                if c ⊃ b is in M for some c ⊆ a
                        then aᵖ := aᵖ ∪ {b} end if
                if c̄b̄ or b̄c̄ is in M for some c ⊆ a
                        then aᵐ := aᵐ ∪ {b} end if
                if d ⊃ b is in M for some b ∈ a
                        then aᵐ := aᵐ ∪ d end if
        end while
        if aᵖ ∩ aᵐ ≠ ∅ then
                aᵖ := aᵐ := V end if
```

*FIG. 2*

- Initialize O equal to I.
- Validate I with respect to the positive requirement meta–rules. For every $a \in b^+$ with a not in O, remove b from O. Delete all rules $c \in O$ such that $M \vdash B > c$.

  Often, the absence of a positive requirement from the fireable set is a sign that things are wrong, and from an engineering perspective, it may make sense to alert the programmer to the possibility of an error.
- Identify pairs of rules a and b in I, such that $\overline{ab}$ is a minimal disabling rule.
- The system is assumed to be deterministic, so for each rule pair ab identified above, one must be preferred to the other; without loss of generality suppose $M \vdash a > b$.
  - Delete rule b from the output set O.
  - Delete all rules $c \in O$ such that $M \vdash c \supset b$ or $M \vdash b > c$.
- Establish an order on O using the scheduling meta–rules. A total order can be established if the system is well–ordered, or if the scheduling rules on the current output set are enough to force a total order.

## FIG. 3

*FIG. 4*